(19) Europäisches Patentamt / European Patent Office / Office européen des brevets

(11) **EP 2 270 647 A1**

(12) **EUROPEAN PATENT APPLICATION**

(43) Date of publication:
**05.01.2011 Bulletin 2011/01**

(51) Int Cl.:
***G06F 7/506*** (2006.01)

(21) Application number: **09164050.8**

(22) Date of filing: **29.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Panasonic Corporation**
**Kadoma-shi**
**Osaka 571-8501 (JP)**

(72) Inventor: **StansfieldD, Anthony**
**Bristol, Bristol BS1 6EA (GB)**

(74) Representative: **Haley, Stephen**
**Gill Jennings & Every LLP**
**The Broadgate Tower**
**20 Primrose Street**
**London EC2A 2ES (GB)**

(54) **Multi-bit carry chain**

(57) A chain of at least two operational blocks, each operational block comprising an arithmetic unit and a carry bypass circuit for propagating a carry signal along the chain of blocks, each arithmetic unit comprising first and second inputs, means for receiving a carry input signal, means for generating a carry output signal and means for generating a bypass signal, the bypass signal being active only if, based on the values input into the first and second inputs, the carry input signal is equal to the carry output signal. Each operational block further comprises receiving means for receiving the bypass signal from the arithmetic unit of a first operational block in the chain and the carry input signal, the carry output signal and the bypass signal from the arithmetic unit of a second operational block in the chain, the second operational block being the operational block preceding the first operational block in the chain; and switching means arranged to propagate the carry output signal of the first operational block if the bypass signal of the first operational block is inactive, propagate the carry output signal of the second operational block if the bypass signal of the first operational block is active and the bypass signal of the second operational block is inactive and propagate the carry input signal of the second operational block if the bypass signal of the first operational block is active and the bypass signal of the second operational block is active.

FIGURE 6

**Description**

The present invention relates to the field of carry chains for logic circuits. More specifically, the present invention relates to a fast multi-bit carry chain.

Reconfigurable devices are often used for performing arithmetic operations, and commonly include circuitry to improve the operating frequency of such operations. These circuits typically include dedicated hardware to speed up the performance of the carry chain which connects multiple function units together to do arithmetic on wider words.

Many carry techniques are know, each of which provide associated advantages and disadvantages. One example of such a technique is embodied the ripple carry adder, which works using the same principle used when adding two numbers using a pen and paper. This method involves adding the two least significant digits of each number and adding the carry to the addition of the next two digits on the left. A disadvantage of this method is that in order to determine the final result of the sum of any two digit, one must wait until the carry is factored in from the operation on the adjacent less significant digit.

In order to address this problem, carry lookahead circuits were developed. In carry lookahead adders, several single bit adders are grouped into blocks and dedicated circuitry determines if a carry bit, input into the adder of the least significant bit of the group, will propagate to the carry output of the most significant bit of that group. To do this, each adder calculates their result without using their respective carry inputs. Based on these results, the carry lookahead circuitry determines, for each adder, whether that adder will propagate a carried value from its carry input to its carry output. Based on these calculations, the carry lookahead circuit then determines whether a carry value, input into the adder of the least significant bit of the group, will propagate to the carry output of the most significant bit of the group. Carry lookahead adders are very fast but also require very large and complex circuitry, as their area scales superlinearly with wordlength.

Some of the above problems can be solved by carry select adders which typically comprise two ripple carry adders and one multiplexer. Adding two n-bit numbers with a carry select adder is done by performing each calculation twice (i.e. once with each set of n-bit adders), once with the assumption that the resulting carry is zero and the other with the assumption that the carry is one. After the two results are calculated, the correct sum, as well as the correct carry is then selected with the multiplexer, which is controlled by the carry from the previous adder. Although carry select circuits are smaller than carry lookahead circuits, they are typically slower than carry lookahead circuits. Also, despite being faster than simple ripple carry circuits, they require duplicate calculations and therefore result in relatively bulkier circuits.

Carry bypass (or carry skip) adders determine, for each adder in a group of adders, whether the carry input into the adder is propagated through to the carry output of the adder. These results are then fed into an AND gate, the output of which controls a multiplexer which selects between the carry output from the most significant adder and the carry input into the least significant adder. Carry bypass adders therefore represent a good compromise between size and speed.
Whilst this technique provides several advantages over the prior art in relation to speed and simplicity, it shares the problem of a lack of scalability with the above mentioned techniques.

Accordingly, there is a clear need for a fast and simple multi-bit carry chain which is easily scalable.

In order to solve the problems addressed by the prior art, the present invention provides a chain of at least two operational blocks, each operational block comprises an arithmetic unit and a carry bypass circuit for propagating a carry signal along the chain of blocks, each arithmetic unit comprising first and second inputs, means for receiving a carry input signal, means for generating a carry output signal and means for generating a bypass signal, the bypass signal being active only if, based on the values input into the first and second inputs, the carry input signal is equal to the carry output signal, each operational block further comprises:

    receiving means for receiving the bypass signal from the arithmetic unit of a first operational block in the chain and the carry input signal, the carry output signal and the bypass signal from the arithmetic unit of a second operational block in the chain, the second operational block being the operational block preceding the first operational block in the chain ; and

    switching means arranged to propagate the carry output signal of the first operational block if the bypass signal of the first operational block is inactive, propagate the carry output signal of the second operational block if the bypass signal of the first operational block is active and the bypass signal of the second operational block is inactive and propagate the carry input signal of the second operational block if the bypass signal of the first operational block is active and the bypass signal of the second operational block is active.

The operational blocks in the functional chain are preferably connected through the routing network of a reconfigurable logic device.
The switching means preferably comprises a multiplexer.

The arithmetic unit preferably comprises a multi-bit ALU.

The arithmetic unit preferably comprises a multi-bit adder.

The bypass signal of each arithmetic unit is preferably created by combining an OR reduction of a bitwise AND of the first input of the arithmetic unit and the second input of the arithmetic unit with an OR reduction of the bitwise AND of the inverse of the first input of the arithmetic unit and the inverse of the second input of the arithmetic unit.

The present invention also provides a reconfigurable device comprising a chain in accordance with the above.

The present invention also provides a method of propagating a carry signal from a first operational block to a second operational block in a chain of operational blocks, each operational block in the chain comprising an arithmetic unit and a carry bypass circuit for propagating a carry signal along the chain of blocks, each arithmetic unit comprising first and second inputs, means for receiving a carry input signal, means for generating a carry output signal and means for generating a bypass signal, the bypass signal being active only if, based on the values input into the first and second inputs, the carry input signal is equal to the carry output signal, the method comprises the steps of:

receiving the bypass signal from the arithmetic unit of a first operational block in the chain and the carry input signal, the carry output signal and the bypass signal from the arithmetic unit of a second operational block in the chain, the second operational block being the operational block preceding the first operational block in the chain ; and

propagating the carry output signal of the first operational block if the bypass signal of the first operational block is inactive, propagating the carry output signal of the second operational block if the bypass signal of the first operational block is active and the bypass signal of the second operational block is inactive and propagating the carry input signal of the second operational block if the bypass signal of the first operational block is active and the bypass signal of the second operational block is active.

The method preferably further comprises the step of:

creating a bypass signal by combining an OR reduction of a bitwise AND of the first input of the arithmetic unit and the second input of the arithmetic unit with an OR reduction of the bitwise AND of the inverse of the first input of the arithmetic unit and the inverse of the second input of the arithmetic unit.

As will be appreciated by the skilled reader, the present invention provides several advantages over the prior art. In particular, the present invention provides a simple and efficient carry chain which is also easily scalable. The invention also provides a way of implementing a fast carry circuit for arithmetic functions in reconfigurable devices. It therefore allows faster arithmetic circuits to be created in a reconfigurable device than would otherwise be the case. The circuit also has features that support the implementation of logical operations other than arithmetic, as bypass control signals can be represented as a combination of OR reductions. Finally, the present invention provides particular advantages within the context of reconfigurable devices, as it allows the carry bypass distance to be larger than the size of the basic ALU that makes the building block of the reconfigurable device.

Specific embodiments of the present invention will now be described with reference to the accompanying drawings, in which:

Figure 1 represents a carry ripple adder in accordance with the prior art;

Figure 2 represents a carry bypass adder in accordance with the prior art;

Figure 3 represents a carry bypass adder comprising two sequential bypass circuits;

Figure 4 represents a carry bypass adder comprising two sequential bypass circuits;

Figure 5 shows a multi-bit representation of the adder of Figure 4;

Figure 6 represents a series of sequential multi-bit adders in accordance with one embodiment of the present invention;

Figure 7 shows the inputs and outputs of the multi-bit carry chain circuit in accordance with the present invention;

Figure 8 represents a path through the sequential multi-bit adders of Figure 6;

Figure 9 represents another path through the sequential multi-bit adders of Figure 6;

Figure 10 represents a path through the sequential multi-bit adders of Figure 6;

Figure 11 represents a series of separate functional units in accordance with the present invention, which functional units being linked via a routing network; and

Figure 12 represents another series of separate functional units in accordance with the present invention, which functional units being linked via a routing network.

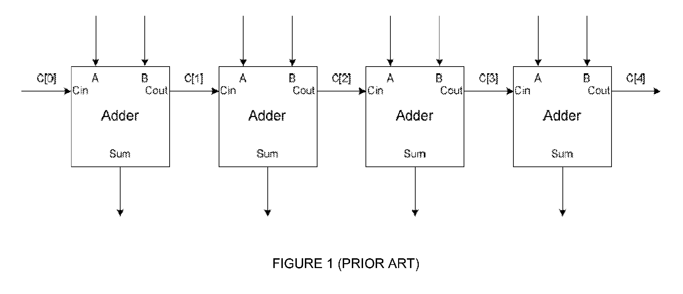

Figure 1 represents a ripple carry adder in accordance with the prior art.

A major disadvantage of the ripple carry adder is that carry bit C[0] must "ripple" through each adder before a determination can be made of the correct output value of the adder.

The function of a single-bit adder cell can be written as follows:

$$Sum = A \otimes B \otimes Cin$$

$$Cout = (A \otimes B)\,?\,Cin : A$$

Accordingly, the Sum output is the XOR of 3 inputs. The carry output is equal to the carry input if A ≠ B and tracks the value of A (or B) if A = B. For the multi-bit adder of Figure 1, several such single-bit adders can be combined:

$$C[0] = Cin;$$

$$Sum[0] = A[0] \otimes B[0] \otimes C[0];$$

$$C[1] = (A[0] \otimes B[0])\,?\,C[0] : A[0];$$

$$Sum[1] = A[1] \otimes B[1] \otimes C[1];$$

$$C[2] = (A[1] \otimes B[1])\,?\,C[1] : A[1];$$

$$Sum[2] = A[2] \otimes B[2] \otimes C[2];$$

$$C[3] = (A[2] \otimes B[2])\,?\,C[2] : A[2];$$

$$Sum[3] = A[3] \otimes B[3] \otimes C[3];$$

$$C[4] = (A[3] \otimes B[3])\,?\,C[3] : A[3];$$

$$Cout = C[4]$$

For an appropriate combination of values of the A[0:3] and B[3:0] inputs, it is possible for the Cin to propagate through all stages of the adder until it reaches Cout. For a simple circuit implementation, this means that the delay from Cin to Cout is proportional to the number of single-bit adders in the propagation chain (i.e. the bit width of the A and B inputs). This delay is a significant disadvantage of the ripple carry adder.

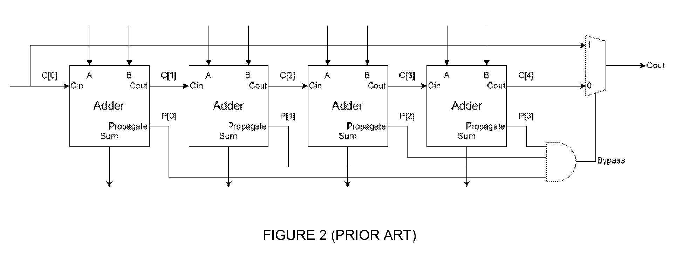

Figure 2 represents a carry bypass (or carry skip) adder in accordance with the prior art. Carry bypass adders speed up carry propagation by detecting situations where Cin propagates to Cout, and enabling a faster carry path when this happens. This requires two modifications to a ripple carry adder.

The first of these modifications is that of separating out the control signal which determines whether or not to propagate the carry signal at each stage:

$$Sum[0] = A[0] \otimes B[0] \otimes C[0];$$

$$P[0] = A[0] \otimes B[0];$$

$$C[1] = P[0]?C[0]:A[0];$$

$$Sum[1] = A[1] \otimes B[1] \otimes C[1];$$

$$P[1] = A[1] \otimes B[1];$$

$$C[2] = P[1]?C[1]:A[1];$$

$$Sum[2] = A[2] \otimes B[2] \otimes C[2];$$

$$P[2] = A[2] \otimes B[2];$$

$$C[3] = P[2]?C[2]:A[2];$$

$$Sum[3] = A[3] \otimes B[3] \otimes C[3];$$

$$P[3] = A[3] \otimes B[3];$$

$$C[4] = P[3]?C[3]:A[3];$$

The second modification is the addition of a mechanism which identifies the situation where all the single-bit adders pass on the carry signal and pass Cin directly to Cout:

$$Cout = (P[0] \bullet P[1] \bullet P[2] \bullet P[3])?Cin:C[4]$$

Or

$$Bypass = \left( P[0] \bullet P[1] \bullet P[2] \bullet P[3] \right);$$

$$Cout = Bypass \, ? \, Cin : C[4]$$

In physical terms, this means that the effective delay from Cin to Cout is reduced to a single multiplexer (controlled by the "bypass" signal) rather than one per single-bit adder.

As can be seen from Figure 2, each 1-bit adder in the circuit comprises a propagate signal which indicates whether the Cin input is to be propagated to the Cout output. Each individual propagate signal is then input into an AND gate, the output of which will indicate whether all adders propagate their Cin signal or whether at least one adder is not propagating its Cin signal. The output of the AND gate is typically used to control a multiplexer which selects between C[4] (when not all adders propagate their carry signal) and C[0] (when all adders propagate their carry signal).

Although the example of Figure 2 reduces the delay from Cin to Cout, it does not reduce the delay from Cin to Sum[3] or the delay from A[0] to Cout.

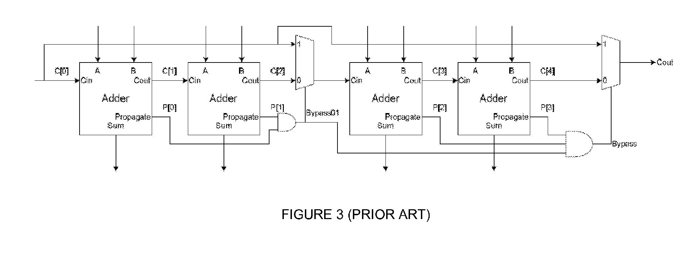

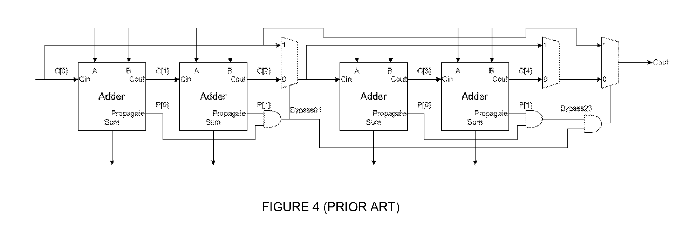

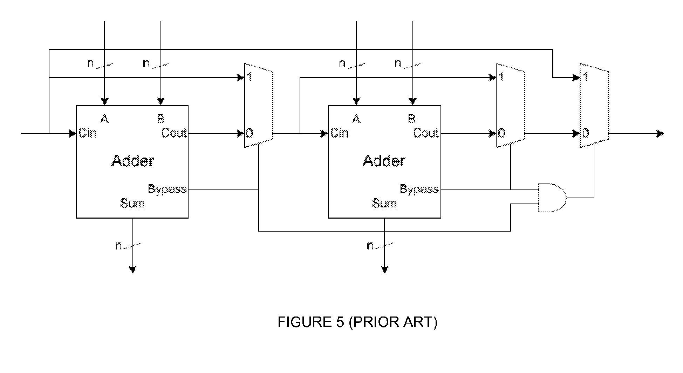

To remedy this, prior art devices have been devised which comprise means for speeding up the internal carry paths of carry bypass adders. Such a device is shown in Figure 3. In the device of Figure 3, a bypass around the first two adders reduces the delay from Cin to Sum[2] and Sum[3]. Another example of such a modified device is shown in Figure 4, where bypass circuits have been implemented at 2-bit and 4-bit intervals. Figure 5 shows a multi-bit representation of the adder of Figure 4.

As can be seen from the above devices, there is a trade off between speed and scalability. The faster a carry bypass circuit is (i.e. the more adders a carry signal skips), the less scalable the circuit will be, as each bypass block of 1-bit adders is indivisible because of the need to feed each propagation signal into the same AND gate.

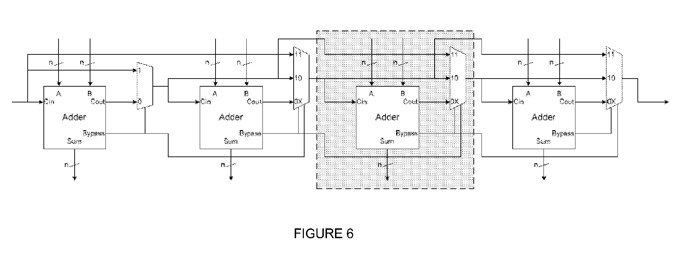

Figure 6 represents a series of multi-bit adders in accordance with the present invention. In certain reconfigurable device in which the routing network carries multi-bit data values between processing elements, it is advantageous to have all the bits necessary to make connections between the repeating elements in Figure 6 be carried in a single word through the routing network. In the device of the present invention, each stage of the carry chain will comprise three inputs and three outputs.

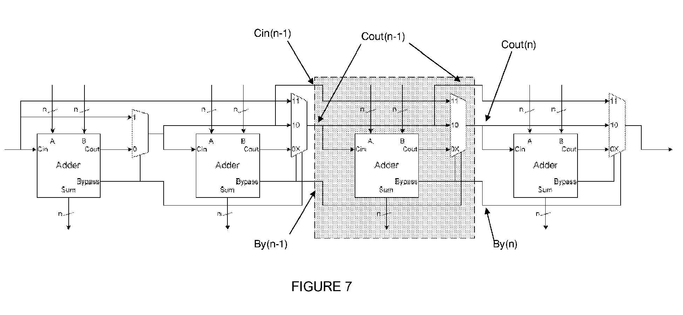

As can be seen from the identified inputs of Figure 7, the inputs are:

1) The carry out from the previous stage: Cout(n-1);
2) The carry in to the previous stage: Cin(n-1); and
3) The bypass signal from the previous state: By(n-1).

As can also be seen from Figure 7, the corresponding outputs are:

1) The carry out from the current stage: Cout(n);
2) The carry out from the previous stage: Cout(n-1); and
3) The bypass signal from the current state: By(n).

As will be appreciated, the circuit provides the advantage that multiple overlapping stages of the bypass network can be simultaneously active, which means that an optimal carry path will be selected to each adder in a word.

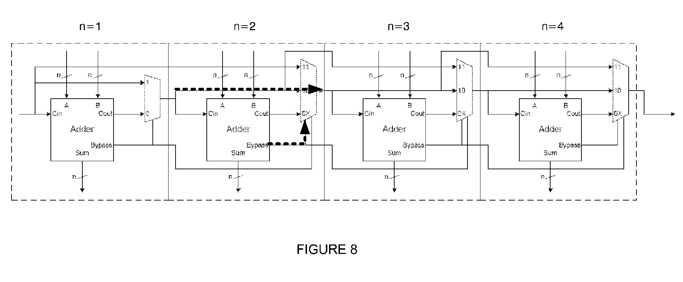

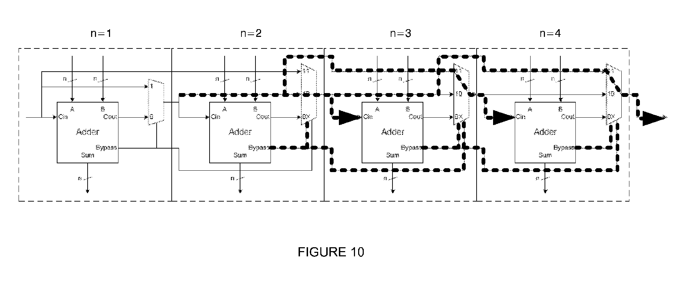

Now, with reference to Figures 8, 9 and 10, the operation of the circuit of Figure 7 will now be described. In this situation, the bypass signal of the first adder (n=1) is not activated but the bypass signal of each subsequent adder is activated.

Figure 8 shows the selection of Cout(2) when the bypass signal of the second adder (n=2) is activated. In the example of Figure 8, because the bypass signal By(1) of the first adder is not activated, the second control bit of the multiplexer in block n=2 is set LOW. Accordingly, the bypass signal By(2) controls the multiplexer by forcing it to select either signal Cout(1) or the Cout from the adder of the second stage. As can be seen, the multiplexer selects Cout(1), which is then sent through the multiplexer and becomes signal Cout(2).

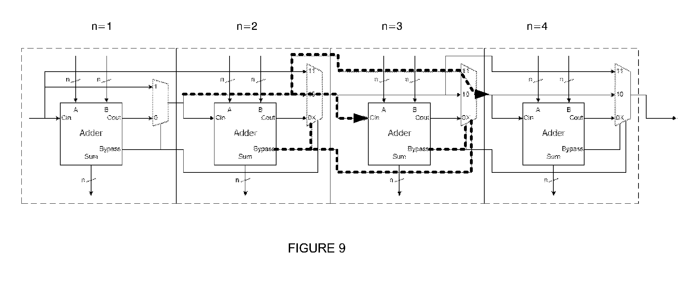

Now, in relation to Figure 9, the third adder (n=3) in the chain now receives the signal Cout(2) output by the multiplexer associated with the second adder. Because both signals By(2) and By(3) are set HIGH, the Cin(2) will be selected by the multiplexer and sent to block n=4 as signal Cout(3). Similarly, because signals By(3) and By(4) are set HIGH, Cin(3) (which is the same as Cin(2)) will be selected by the multiplexer and sent to the next stage as signal Cout(4). Accordingly, because the bypass signals of adders n=2, 3 and 4 are set to HIGH, the carry of adder n=1 will bypass adders n=2, 3 and 4 entirely.

For the sake of clarity. the multiplexer of the first block (n=1) comprises a single control signal. As will be appreciated by the skilled reader however, the circuit of the first adder can comprise a multiplexer having two control bits (as is the case with blocks n=2, 3 and 4), the second bit of which is simply tied to a constant value.

As will be appreciated from Figures 8, 9 and 10, adder blocks in accordance with the present invention could easily be added to the four blocks of the example without the need to add any circuitry. The present invention therefore provides a simple and very efficient carry bypass chain which is entirely scalable.

The present invention also provides a particularly advantageous method of implementing the circuit of the present invention. As explained above, the bypass signal can be expressed as:

$$Bypass = \left(P[0] \bullet P[1] \bullet P[2] \bullet P[3]\right);$$

$$P[3:0] = A[3:0] \otimes B[3:0]$$

Therefore:

$$!Bypass = !(P[0] \bullet P[1] \bullet P[2] \bullet P[3])$$
$$!P[3:0] = !(A[3:0] \otimes B[3:0])$$
$$= (A[3:0] \bullet B[3:0]) (!A[3:0] \bullet !B[3:0])$$
$$!Bypass = (A[0] \bullet B[0]) (!A[0] \bullet !B[0]) (A[1] \bullet B[1]) (!A[1] \bullet !B[1]) (A[2] \bullet B[2]) (!A[2] \bullet !B[2]) (A[3] \bullet B[3]) (!A[3] \bullet !B[3])$$
$$= ((A[0] \bullet B[0]) (A[1] \bullet B[1]) (A[2] \bullet B[2]) (A[3] \bullet B[3])) (!A[0] \bullet !B[0]) (!A[1] \bullet !B[1]) (!A[2] \bullet !B[2]) (!A[3] \bullet !B[3]))$$

Thus, the bypass signal can be created from an OR reduction of a bitwise AND of the A and B inputs, combined with an OR reduction of the bitwise AND of !A and !B.

This OR reduction of a bitwise AND is similar in form to a so-called "sum-of-products" logic expression. It is therefore useful to encode the bypass signal as 2 (or more) OR reductions of bitwise AND functions when passing the bundled carry and bypass signals between processing elements. This means that the same processing element can be used to implement both arithmetic functions and control logic, with the bundled signals being useful for either arithmetic or control functions.

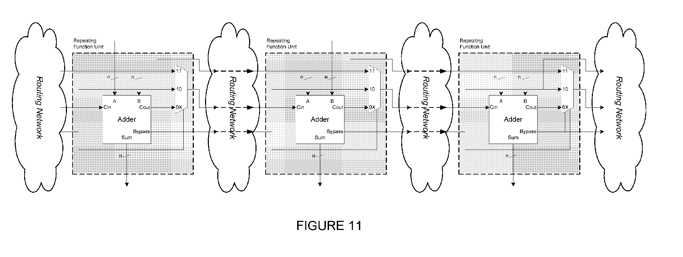

Now, with reference to Figure 11, a particularly advantageous embodiment of the present invention will now be described. The advantages of the present invention are particularly apparent when the invention is used in a reconfigurable device. In this embodiment, the repeating operational blocks can be connected through the routing network of the reconfigurable device, thereby providing scalability increased scalability.

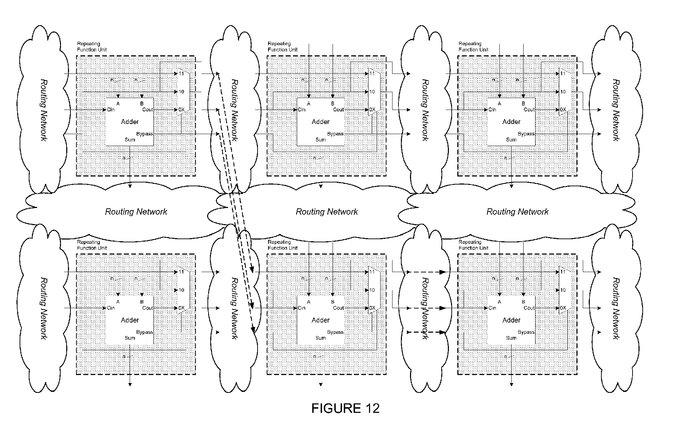

Finally, with reference to Figure 12, another particularly advantageous embodiment of the present invention will now be described. Similarly to the embodiment of Figure 11, the embodiment of Figure 12 uses the routing network of a reconfigurable logic device to connect different operational blocks. As can be seen from this embodiment, the operational blocks used to construct a wide adder do not need to be in any particular row (or column) order, since the routing network can be used to connect them in any pattern.

## Claims

1.   A chain of at least two operational blocks, each operational block comprising an arithmetic unit and a carry bypass circuit for propagating a carry signal along the chain of blocks, each arithmetic unit comprising first and second inputs, means for receiving a carry input signal, means for generating a carry output signal and means for generating a bypass signal, the bypass signal being active only if, based on the values input into the first and second inputs, the carry input signal is equal to the carry output signal, each operational block further comprising:

   receiving means for receiving the bypass signal from the arithmetic unit of a first operational block in the chain and the carry input signal, the carry output signal and the bypass signal from the arithmetic unit of a second operational block in the chain, the second operational block being the operational block preceding the first operational block in the chain; and

switching means arranged to propagate the carry output signal of the first operational block if the bypass signal of the first operational block is inactive, propagate the carry output signal of the second operational block if the bypass signal of the first operational block is active and the bypass signal of the second operational block is inactive and propagate the carry input signal of the second operational block if the bypass signal of the first operational block is active and the bypass signal of the second operational block is active.

2. A chain in accordance with claim 1, wherein the operational blocks in the functional chain are connected through the routing network of a reconfigurable logic device.

3. A chain in accordance with any of the preceding claims, wherein the switching means comprises a multiplexer.

4. A chain in accordance with any of the preceding claims, wherein the arithmetic unit comprises a multi-bit ALU.

5. A chain in accordance with any of the preceding claims, where the arithmetic unit comprises a multi-bit adder.

6. A chain in accordance with any of the preceding claims, wherein the bypass signal of each arithmetic unit is created by combining an OR reduction of a bitwise AND of the first input of the arithmetic unit and the second input of the arithmetic unit with an OR reduction of the bitwise AND of the inverse of the first input of the arithmetic unit and the inverse of the second input of the arithmetic unit.

7. A reconfigurable device comprising a chain in accordance with any of the preceding claims.

8. A method of propagating a carry signal from a first operational block to a second operational block in a chain of operational blocks, each operational block in the chain comprising an arithmetic unit and a carry bypass circuit for propagating a carry signal along the chain of blocks, each arithmetic unit comprising first and second inputs, means for receiving a carry input signal, means for generating a carry output signal and means for generating a bypass signal, the bypass signal being active only if, based on the values input into the first and second inputs, the carry input signal is equal to the carry output signal, the method comprising the steps of:

   receiving the bypass signal from the arithmetic unit of a first operational block in the chain and the carry input signal, the carry output signal and the bypass signal from the arithmetic unit of a second operational block in the chain, the second operational block being the operational block preceding the first operational block in the chain ; and

   propagating the carry output signal of the first operational block if the bypass signal of the first operational block is inactive, propagating the carry output signal of the second operational block if the bypass signal of the first operational block is active and the bypass signal of the second operational block is inactive and propagating the carry input signal of the second operational block if the bypass signal of the first operational block is active and the bypass signal of the second operational block is active.

9. A method in accordance with claim 8, wherein the method further comprises the step of:

   creating a bypass signal by combining an OR reduction of a bitwise AND of the first input of the arithmetic unit and the second input of the arithmetic unit with an OR reduction of the bitwise AND of the inverse of the first input of the arithmetic unit and the inverse of the second input of the arithmetic unit.

C[0] → Cin | A  B | Cout → C[1] → Cin | A  B | Cout → C[2] → Cin | A  B | Cout → C[3] → Cin | A  B | Cout → C[4]

Adder — Sum    Adder — Sum    Adder — Sum    Adder — Sum

FIGURE 1 (PRIOR ART)

FIGURE 2 (PRIOR ART)

FIGURE 3 (PRIOR ART)

FIGURE 4 (PRIOR ART)

FIGURE 5 (PRIOR ART)

FIGURE 6

FIGURE 7

FIGURE 8

FIGURE 9

FIGURE 10

FIGURE 11

FIGURE 12

## EP 2 270 647 A1

**EUROPEAN SEARCH REPORT**

Application Number

EP 09 16 4050

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STROLLO A G M ET AL: "Performance analysis of a two-level carry-skip adder implemented in complementary pass-transistor logic" MICROELECTRONICS JOURNAL, MACKINTOSH PUBLICATIONS LTD. LUTON, GB, vol. 29, no. 10, 1 October 1998 (1998-10-01), pages 755-760, XP004129300 ISSN: 0026-2692 * figure 3 * | 1-9 | INV. G06F7/506 |
| X | US 5 523 963 A (HSIEH HUNG-CHENG [US] ET AL) 4 June 1996 (1996-06-04) * figure 1 * | 1-9 | |
| A | KANTABUTRA V: "ACCELERATED TWO-LEVEL CARRY-SKIP ADDERS. ÖA TYPE OF VERY FAST ADDERS" IEEE TRANSACTIONS ON COMPUTERS, IEEE SERVICE CENTER, LOS ALAMITOS, CA, US, vol. 42, no. 11, 1 November 1993 (1993-11-01), pages 1389-1393, XP000418199 ISSN: 0018-9340 * abstract * | 2,7 | TECHNICAL FIELDS SEARCHED (IPC) G06F |

The present search report has been drawn up for all claims

| Place of search | Date of completion of the search | Examiner |
|---|---|---|
| Munich | 8 October 2009 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 270 647 A1

## ANNEX TO THE EUROPEAN SEARCH REPORT
## ON EUROPEAN PATENT APPLICATION NO.

EP 09 16 4050

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2009

| Patent document cited in search report | Publication date | Patent family member(s) | Publication date |
|---|---|---|---|
| US 5523963 A | 04-06-1996 | NONE | |

EPO FORM P0459

For more details about this annex : see Official Journal of the European Patent Office, No. 12/82

22